# EUROPÄISCHE PATENTSCHRIFT

(11) **EP 1 874 574 B1**
(45) Veröffentlichungstag und Bekanntmachung des Hinweises auf die Patenterteilung: **11.04.2012**
(21) Anmeldenummer: 06708412.9
(22) Anmeldetag: 21.02.2006
(51) Int. Cl.: B60W 20/00, B60W 10/08, B60W 10/06, B60K 6/48

(54) **VERFAHREN ZUM BETREIBEN EINES HYBRID-FAHRZEUG-ANTRIEBS UND VORRICHTUNG ZUR DURCHFÜHRUNG DES VERFAHRENS**
METHOD FOR OPERATING A HYBRID VEHICLE DRIVE AND A DEVICE FOR CARRYING OUT SAID METHOD
PROCEDE POUR FAIRE FONCTIONNER UN ENTRAINEMENT DE VEHICULE HYBRIDE ET DISPOSITIF POUR METTRE EN OEUVRE CE PROCEDE

(30) Priorität: 21.04.2005 DE 102005018437
(43) Veröffentlichungstag der Anmeldung: 09.01.2008
(73) Patentinhaber: ROBERT BOSCH GMBH, 70442 Stuttgart (DE)
(72) Erfinder: FALKENSTEIN, Jens-Werner, 73434 Aalen (DE)
(86) Internationale Anmeldenummer: PCT/EP2006/060132
(87) Internationale Veröffentlichungsnummer: WO 2006/111434

(56) Entgegenhaltungen:
- EP-A- 1 106 412
- EP-A- 1 300 273
- EP-A- 1 350 650
- WO-A-96/01193
- DE-A1- 4 422 636
- DE-A1- 4 422 647
- DE-A1- 19 906 601
- US-A- 5 806 617
- US-A- 5 832 396
- US-B1- 6 336 063
- US-B1- 6 470 983

## Beschreibung

### Stand der Technik

Die Erfindung betrifft ein Verfahren zum Betreiben eines Fahrzeug-Antriebs und eine Vorrichtung zur Durchführung des Verfahrens.

Zur Reduzierung von Emissionen und Kraftstoffverbrauch sind Hybridfahrzeuge bekannt. Deren Ziel ist, den Verbrennungsmotor im Bereich günstiger Wirkungsgrade zu betreiben, bei Stillstand des Fahrzeugs bzw. bei geringen Fahrzeuggeschwindigkeiten den Verbrennungsmotor abzuschalten und elektrisch angetrieben zu fahren sowie Bremsenergie durch Rekuperation zu nutzen. Bei Parallelhybriden erfolgt eine Addition der Drehmomente von Verbrennungsmotor und einer oder mehrerer Elektromaschinen. Die Elektromaschinen sind z.B. als Startergeneratoren mit dem Riementrieb oder mit der Kurbelwelle des Verbrennungsmotors verbunden.

Bei modernen Verbrennungsmotoren können verschiedene Betriebspunkte im Hinblick auf Abgasemissionen und Kraftstoffverbrauch problematisch sein. Beim Benzinmotor können z.B. hohe Drehmomente eine Abweichung vom stöchiometrischen Luft-Kraftstoffgemisch erfordern, ebenso kann eine Volllastanreicherung notwendig sein, um Bauteiltemperaturen in erlaubten Grenzen zu halten. Um sehr kleine Drehmomente einzustellen, ist eine Verschiebung des Zündwinkels in Richtung spät üblich, die auch eingesetzt wird, um einen Drehmomentvorhalt zu erzielen, um z.B. im Leerlauf einen schnellen Drehmomentaufbau zu ermöglichen. Mit der Zündwinkelverschiebung verschlechtert sich allerdings der Wirkungsgrad. In Verbindung mit Schubanschaltungen können erhöhte Stickoxidemissionen durch Sauerstoffüberschuss im Katalysator entstehen. Ebenso ist beim Betrieb eines Dieselmotors bei hohen Drehmomenten mit erhöhten Schwärzungszahlen und Stickoxidemissionen zu rechnen, bei geringen Drehmomenten besteht die Gefahr, dass der Katalysator auskühlt.

Aus der gattungsgemäßen DE 4422647 A1 ist ein Verfahren und ein Vorrichtung zur automatischen Steuerung der Bereitstellung von Leistung durch eine Brennkraftmaschine und/oder durch einen Elektromotor in einem Hybridfahrzeug bekannt.

Die nicht vorveröffentlichte DE 10 2004 044 507 beschreibt ein Verfahren und eine Vorrichtung zum Betreiben eines Fahrzeugantriebs mit wenigstens einer Verbrennungskraftmaschine und mit wenigstens einer Elektromaschine, wobei die Verbrennungskraftmaschine und die Elektromaschine ein angefordertes Antriebs-Solldrehmoment gemeinsam erzeugen. Durch geeigneten Einsatz der Elektromaschine können ungünstige Drehmomentbereiche und ungünstige hohe Änderungsgeschwindigkeiten des optimalen Solldrehmoments der Verbrennungskraftmaschine vermieden werden.

### Vorteile der Erfindung

Es wird ein Verfahren mit den Merkmalen des Anspruchs 1 zum Betreiben eines Fahrzeug-Antriebs vorgeschlagen, bei dem der wenigstens eine Verbrennungsmotor und die wenigstens eine Elektromaschine ein angefordertes Antriebssollmoment im Wesentlichen gemeinsam erzeugen, eine momentane elektromotorische Drehmomentreserve der einen oder mehreren Elektromaschinen ermittelt und diese bei einer Vorgabe einer verbrennungsmotorischen Drehmomentreserve für den wenigstens einen oder für die mehreren Verbrennungsmotor(en) so berücksichtigt wird, dass die verbrennungsmotorische Drehmomentreserve minimal wird. In Summe ist dann eine vorgegebene Drehmomentreserve für das Antriebsdrehmoment des gesamten Antriebs vorhanden. Vorteilhaft ist, dass die verbrennungsmotorische Drehmomentreserve durch eine Zündwinkelspätverstellung, die mit erhöhtem Kraftstoffverbrauch und Abgasemissionen einher geht, erst dann eingesetzt werden muss, wenn die elektromotorische Drehmomentreserve der Elektromaschine(n) zu gering geworden ist, um die angeforderte Drehmomentreserve für das gesamte Antriebsdrehmoment des Antriebs einzustellen. Durch die Zündwinkelverstellung kann eine nahezu verzögerungsfreie Änderung, insbesondere Reduzierung, des Verbrennungsmotordrehmoments erfolgen. Es können zwei Pfade zur Drehmomentansteuerung des Verbrennungsmotors genutzt werden, wobei der langsame Pfad eine Luftmassenstromregulierung mittels einer insbesondere elektrischen Drosselklappe bedeutet und der schnelle Pfad eine Zündwinkelverstellung, insbesondere Zündwinkelspätverstellung. Die Drehmomentansteuerung einer modernen Elektromaschine weist eine sehr viel höhere Dynamik im Vergleich mit dem langsamen Pfad der Drehmomentansteuerung eines Verbrennungsmotors auf. Das erfindungsgemäße Verfahren erlaubt eine hohe Dynamik des Antriebs.

Die Erfindung kann bei allen Hybridantrieben eingesetzt werden, bei denen das Drehmoment eines Verbrennungsmotors oder mehrerer Verbrennungsmotoren und das Drehmoment einer Elektromaschine oder mehrerer Elektromaschinen zusammen ein Antriebsmoment ergeben.

Die elektromotorische Drehmomentreserve kann mit hoher Genauigkeit anhand von momentanen Betriebszuständen der einen oder der mehreren Elektromaschinen, des einen oder der mehreren Energiespeicher und des einen oder der mehreren Bordnetze(s) ermittelt werden. Eine hohe Dynamik bei gleich bleibend geringem Kraftstoffverbrauch und geringen Abgasemissionen kann gewährleistet werden, wenn die fehlende verbrennungsmotorische Drehmomentreserve durch die eine oder mehrere Elektromaschinen kompensiert wird

Zweckmäßigerweise werden ein Vorhalte-Antriebssollmoment und ein Antriebssollmoment für den gesamten Antrieb von einer übergeordneten Steuerungseinrichtung vorgegeben. Bevorzugt wird die Momentenreserve für das gesamte Antriebsdrehmoment des Antriebs gleich der Differenz zwischen dem Vorhalte-AntriebsSollmoment und dem Antriebssollmoment, wobei das Vorhalte-Antriebs-Sollmoment größer ist als oder gleich groß ist wie das Antriebssollmoment.

Es ist vorteilhaft für die Betriebssicherheit des Fahrzeugs, wenn ein Lade-Sollmoment der einen oder wenigstens einer der Elektromaschinen eingestellt wird, das eine Versorgung des oder der Bordnetze(s) und des oder der Energiespeicher sicherstellt. Bevorzugt wird bei negativem Lade-Sollmoment die oder wenigstens eine der Elektromaschinen generatorisch betrieben, um den Energiespeicher wieder aufzufüllen. Günstigerweise wird dann das Vorhalte-Antriebssollmoment und das Antriebssollmoment für den gesamten Antrieb erhöht, um die Last der Elektromaschinen auszugleichen.

Anhand der momentanen Betriebszustände der einen oder der mehreren Elektromaschine(n), des einen oder der mehreren Energiespeicher und des einen oder der mehreren Bordnetze(s) können ein momentanes Maximalmoment und ein momentanes Minimalmoment der einen oder der mehreren Elektromaschine(n) ermittelt werden. Bevorzugt wird die elektromotorische Drehmomentreserve als Differenz zwischen dem momentanen Maximalmoment und dem Lade-Sollmoment gebildet.

Ein Vorhalte-Sollmoment für den Verbrennungsmotor kann aus dem Vorhalte-Antriebssollmoment für den gesamten Antrieb, korrigiert um das Lade-Sollmoment, ermittelt werden, wobei das Vorhalte-Sollmoment durch Luftmassenströmungseinstellung erzeugt wird.

Ein verbrennungsmotorisches Sollmoment kann aus dem um das Lade-Sollmoment korrigierten Antriebssollmoment für den gesamten Antrieb gebildet werden, wobei das verbrennungsmotorische Sollmoment über eine Zündwinkelverstellung eingestellt wird.

Ein erhöhter Kraftstoffverbrauch und erhöhte Abgasemissionen können auf wenige Betriebsphasen beschränkt werden, wenn die verbrennungsmotorische Drehmomentreserve erst eingestellt wird, wenn die elektromotorische Drehmomentreserve geringer wird als die angeforderte Momentenreserve für das gesamte Antriebsdrehmoment.

Das Vorhalte-Sollmoment für den Verbrennungsmotor wird vorzugsweise stets größer als das oder mindestens gleich dem Sollmoment für den Verbrennungsmotor gewählt. Dies erfolgt zweckmäßigerweise mittels einer Maximumauswahl.

Ein Differenzmoment zwischen einem Istmoment des Verbrennungsmotors und dem Sollmoment kann der oder den Elektromaschine(n) aufgeschaltet werden und aus der Summe des Differenzmoments und des Lade-Sollmoments ein Sollmoment der Elektromaschinen gebildet werden. Vorteilhaft wird hier die Drehmomentreserve der Elektromaschine(n) genutzt. Wird nämlich die Momentenreserve für das gesamte Antriebsmoment genutzt, d.h. das Antriebsollmoment mit hoher Dynamik in Richtung Vorhalte-Antriebssollmoment gesteigert, kann aufgrund der Maximumauswahl auch am Vorhalte-Sollmoment für den Verbrennungsmotor ein Anstieg mit hohem Gradienten entstehen. Durch dynamische Füllungseffekte im Saugrohr, modelliert als Totzeitglied und Verzögerungsglied erster Ordnung, folgt das Basismoment des Verbrennungsmotors, das dieser aufgrund des vorgegebenen Vorhalte-Sollmoments bei optimalem Zündwinkel erzeugen würde, in diesem Fall nur verzögert, das Istmoment des Verbrennungsmotors ist auf das Basismoment begrenzt und weicht dann temporär vom Sollmoment für den Verbrennungsmotor ab. Das dabei entstehende Differenzmoment wird der oder den Elektromaschine(n) aufgeschaltet und ergibt zusammen mit dem Lade-Sollmoment das Sollmoment für die Elektromaschine.

Es wird eine Vorrichtung mit den Merkmalen des Anspruchs 14 zur Durchführung des Verfahrens zum Betreiben eines Fahrzeug-Antriebs vorgeschlagen, mit wenigstens einem Verbrennungsmotor und wenigstens einer mit dem wenigstens einen Verbrennungsmotor mechanisch gekoppelten Elektromaschine sowie mit wenigstens einem mit der wenigstens einen Elektromaschine und dem wenigstens einen Verbrennungsmotor wirkverbundenen Energiespeicher in wenigstens einem elektrischen Bordnetz, wobei der wenigstens eine Verbrennungsmotor und die wenigstens eine Elektromaschine ein angefordertes Antriebssollmoment im Wesentlichen gemeinsam erzeugen, und wobei eine übergeordnete Steuerungseinrichtung ausgebildet ist, um ein Vorhalte-Sollmoment für den gesamten Antrieb und ein Sollmoment für den gesamten Antrieb so vorzugeben, dass eine momentane elektromotorische Drehmomentreserve der einen oder mehreren Elektromaschinen ermittelbar und diese bei einer Vorgabe einer verbrennungsmotorischen Drehmomentreserve für den wenigstens einen oder für die mehreren Verbrennungsmotoren so berücksichtigt ist, dass die verbrennungsmotorische Drehmomentreserve minimal wird und in Summe eine vorgegebene Drehmomentreserve für das Antriebsdrehmoment des gesamten Antriebs vorhanden ist

### Zeichnungen

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand von Zeichnungen dargestellten Ausführungsbeispielen der Erfindung.

Im Folgenden zeigen:
- Fig. 1: ein bevorzugtes Schema des vorgeschlagenen Verfahrens mit einem Verbrennungsmotor und einer Elektromaschine; und
- Fig. 2 a-d: Zeitverläufe von Drehmomenten mit (a) einem Vorhalte-Sollmoment und einem Sollmoment für den gesamten Antrieb, (b) einem Basismoment eines Verbrennungsmotors und einem Istmoment, (c) ein Istdrehmoment einer Elektromaschine, (d) einem Istdrehmoment des gesamten Antriebs.

### Beschreibung des Ausführungsbeispiels

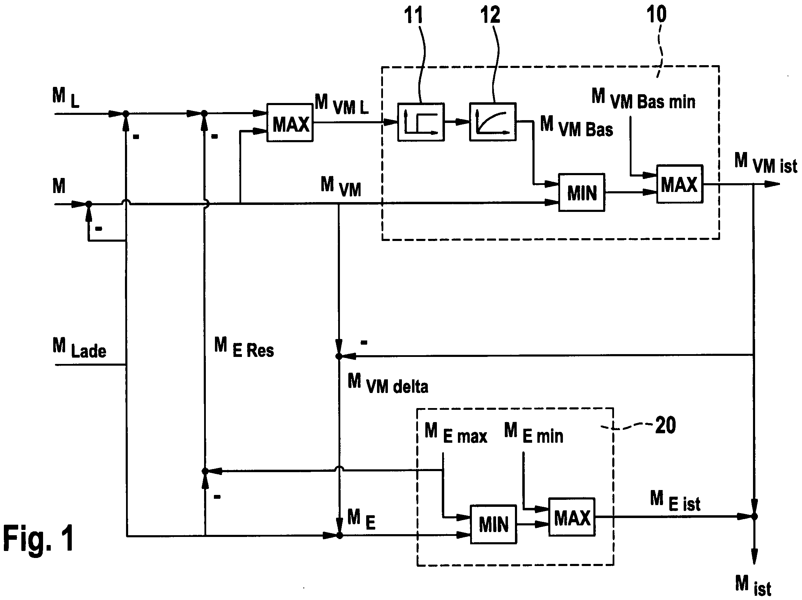

Bei dem erfingdungsgemäß vorgeschlagenen Verfahren zum Betreiben eines Fahrzeug-Antriebs, das in Fig. 1 skizziert ist, ist wenigstens ein Verbrennungsmotor 10 und wenigstens eine mit dem wenigstens einen Verbrennungsmotor 10 mechanisch gekoppelten Elektromaschine 20 vorgesehen. Der Verbrennungsmotor 10 ist vorzugsweise ein Ottomotor mit einer Saugrohreinspritzung und mit einem nicht zeichnerisch dargestellten elektronischen Gaspedal mit elektronischer Drosselklappe und einem nicht zeichnerisch dargestellten Katalysator versehen. Das Schwungrad des Verbrennungsmotors 10 ist mit der Elektromaschine 20 gekoppelt, die vorzugsweise als Kurbelwellenstartergenerator ausgebildet ist.

Ferner ist wenigstens ein mit der wenigstens einen Elektromaschine 20 und dem wenigstens einen Verbrennungsmotor 10 wirkverbundener, nicht zeichnerisch dargestellter Energiespeicher in wenigstens einem elektrischen Bordnetz vorgesehen. Der Energiespeicher ist vorzugsweise eine Batterie und kann z.B. durch die Elektromaschine 20 aufgeladen werden, wenn diese generatorisch betrieben wird. Der Verbrennungsmotor 10 und die Elektromaschine 20 erzeugen ein angefordertes Antriebssollmoment M im Wesentlichen gemeinsam, wobei sich die Istdrehmomente M_{VM ist} des Verbrennungsmotors 10 und die Istdrehmomente M_{E ist} der Elektromaschine 20 zum Istdrehmoment Mᵢₛₜ des gesamten Antriebs, d.h. zum Summendrehmoment von Verbrennungsmotor 10 und Elektromaschine 20 aufaddieren.

Eine nicht zeichnerisch dargestellte übergeordnete Steuerungseinheit gibt ein Vorhalte-Antriebssollmoment M_{L} und ein Antriebssollmoment M für den gesamten Antrieb vor. Indem M_{L} größer vorgegeben wird als M, wird eine Reserve für das gesamte Antriebsdrehmoment Mᵢₛₜ des Antriebs gefordert, die der Differenz M_{L}-M der beiden Größen entspricht.

Mit einem Lade-Sollmoment M_{Lade} ist ein Eingriff vorgesehen, der die Versorgung des Bordnetzes und des elektrischen Energiespeichers sicherstellt. Bei negativem Lade-Sollmoment M_{Lade} wird die Elektromaschine 20 generatorisch betrieben, und das Vorhalte-Antriebssollmoment M_{L} und das Antriebssollmoment M für den gesamten Antrieb werden erhöht, um die Last der Elektromaschine 20 auszugleichen.

Aus momentanen Betriebszuständen der Elektromaschine 20, des einen oder der mehreren Energiespeicher und des einen oder der mehreren Bordnetze(s) wird ein momentanes Maximalmoment M_{E max} und ein momentanes Minimalmoment M_{E min} der Elektromaschine 20 ermittelt. Die Differenz aus dem Maximalmoment M_{E max} der Elektromaschine 20 und dem Lade-Sollmoment M_{Lade} entspricht einer elektromotorischen Drehmomentreserve M_{E res} der Elektromaschine 20.

Moderne Ottomotoren mit Saurohreinspritzung besitzen meist eine elektronische Drosselklappe zur Luftmassenstromregulierung. Das Fahrpedal ist von der elektronischen Drosselklappe mechanisch entkoppelt. Die endliche Einstellgeschwindigkeit des Drosselklappenstellgliedes und dynamische Füllungseffekte im Saugrohr lassen eine hochdynamische Einstellung eines vorgegebenen Luftmassenstroms und des dadurch erzeugten Verbrennungsmotordrehmoments nicht zu. Ein Zündwinkeleingriff ZWE und ein damit verbundene Reduzierung des Verbrennungsmotordrehmoments kann dagegen nahezu verzögerungsfrei erfolgen. Für die Drehmomentansteuerung sind somit zwei Pfade vorhanden, für die jeweils ein zugeordnetes Solldrehmoment M_{VM L} und M_{VM} vorgegeben werden kann.

Der Vorhalte-Sollmoment M_{VM L} für den Verbrennungsmotor 10 wirkt auf dessen gesamten Luftpfad, und der Luftmassenstrom im Saugrohr wird entsprechend eingestellt. Bei optimalem Zündwinkel würde der Verbrennungsmotor 10 ein als Basismoment M_{VM Bas} bezeichnetes Drehmoment erzeugen. Im stationären Bereich entspricht das Basismoment M_{VM Bas} dem Vorhalte-Sollmoment M_{VM L} des Verbrennungsmotors 10.

Im instationären Bereich wirken dynamische Füllungseffekte im Saugrohr, in dem Verbrennungsluft für den Verbrennungsmotor 10 angesaugt wird. Die Übertragung vom Vorhalte-Sollmoment M_{VM L} auf das Basismoment M_{VM Bas} lässt sich näherungsweise mittels Reihenschaltung eines Totzeitglieds 11 und eines Verzögerungsglieds erster Ordnung 12 (PT1) beschreiben.

Neben dem Vorhalte-Sollmoment M_{VM L}, das über eine Drosselklappenverstellung auf den Luftpfad wirkt, wirkt ein Sollmoment M_{VM} für den Verbrennungsmotor 10 auf den schnellen Zündwinkelpfad. Mittels Spätverstellung des Zündwinkels gegenüber dem optimalen Zündwinkel wird der Wirkungsgrad des Verbrennungsmotors 10 gegenüber dem Basismoment M_{VM Bas} verringert.

Das Modell in der Fig. 1 stellt die Verhältnisse im Verbrennungsmotor 10 vereinfacht dar. Das Sollmoment M_{VM} für den Verbrennungsmotor 10 wird auf einen Bereich zwischen dem Basismoment M_{VM Bas} und einem minimalen Basismoment M_{VM Bas min} begrenzt und ergibt das Istmoment M_{VM ist} des Verbrennungsmotors 10. Die Zeitverzögerung beim Zündwinkeleingriff ist gering und kann vernachlässigt werden. Das Basismoment M_{VM Bas} entspricht dabei dem Istmoment M_{VM ist} des Verbrennungsmotors 10, das sich bei optimalem Zündwinkel ergibt. Das minimale Basismoment M_{VM Bas min} ist kleiner als das Basismoment M_{VM Bas} und entspricht dem Istmoment M_{VM ist} im Falle einer maximalen Zündwinkelspätverstellung.

In einigen Betriebszuständen wird das Vorhalte-Sollmoment M_{VM L} von der übergeordneten Steuerungseinheit größer gewählt als das Sollmoment M_{VM}, wobei die Differenz dann einer Drehmomentreserve entspricht. Es entsteht eine Zündwinkelverstellung in Richtung spät. Das Istdrehmoment M_{VM ist} des Verbrennungsmotors 10 kann dann durch Erhöhung des Sollmoments M_{VM}, verbunden mit einem Abbau der Zündwinkelspätverstellung nahezu verzögerungsfrei erhöht werden, um z.B. im Leerlauf einen schnellen Drehmomentaufbau und damit eine schnelle Reaktion auf Laständerungen zu ermöglichen, oder z.B. in Verbindung mit Schaltvorgängen bei Automatikgetrieben.

Das momentane Istdrehmoment M_{VM ist} des Verbrennungsmotors 10 kann bei modernen Verbrennungsmotoren 10 von dessen Motorsteuerung auf der Basis von gemessenen oder abgeschätzten Größen ermittelt werden, beim Benzinmotor mit Saugrohreinspritzung z.B. aus Motordrehzahl, Saugrohrdruck, Zündzeitpunkt und Luftzahl λ. Im Prinzip kann auch bei einem Dieselmotor, insbesondere mit Turboaufladung, die Drehmomentansteuerung in einen langsamen Pfad mit Vorhalte-Sollmoment M_{VM L} und einen schnellen Pfad mit einem Sollmoment M_{VM} aufgeteilt werden.

Die Drehmomentansteuerung bei einer modernen Elektromaschine 20 weist dagegen eine sehr viel höhere Dynamik im Vergleich mit dem langsamen Pfad der Drehmomentsansteuerung des Verbrennungsmotors 10 auf.

Wie in Fig. 1 erkennbar, ergibt sich das Sollmoment M_{VM} für den schnellen Zündwinkelpfad des Verbrennungsmotors 10 aus dem um das Lade-Sollmoment M_{Lade} korrigierten Antriebssollmoment M für den gesamten Antrieb.

Das Vorhalte-Sollmoment M_{VM L} für den Verbrennungsmotor 10 wird aus dem Vorhalte-Antriebssollmoment M_{L} für den gesamten Antrieb, korrigiert um das Lade-Sollmoment M_{Lade}, ermittelt. Die Drehmomentreserve M_{E res} der Elektromaschine 20 wird abgezogen, um die Drehmomentreserve am Verbrennungsmotor 10 zu minimieren. Eine Drehmomentreserve am Verbrennungsmotor 10, verbunden mit einer verbrauchs- und emissionsungünstigen Zündwinkelspätverstellung, wird somit erst dann eingestellt, wenn die Drehmomentreserve M_{E res} der Elektromaschine 20 nicht mehr ausreicht, um die angeforderte Reserve für das gesamte Antriebsdrehmoment Mᵢₛₜ des Antriebs einzustellen.

Eine Maximumauswahl sorgt dafür, dass das Vorhalte-Sollmoment M_{VM L} für den Verbrennungsmotor 10 nicht unter das Sollmoment M_{VM} für den schnellen Zündwinkelpfad des Verbrennungsmotors 10 abfällt.

Wird die Reserve für das gesamte Antriebsdrehmoment Mᵢₛₜ genutzt, d.h. das Antriebsollmoment M wird mit hoher Dynamik in Richtung Vorhalte-Antriebssollmoment M_{L} gesteigert, kann aufgrund der Maximumauswahl auch am Vorhalte-Sollmoment M_{VM L} für den Verbrennungsmotor 10 ein Anstieg mit hohen Gradienten entstehen. Durch dynamische Füllungseffekte im Saugrohr, modelliert als Totzeitglied 11 und Verzögerungsglied erster Ordnung 12 (PT1) folgt das Basismoment M_{VM Bas} in diesem Fall nur verzögert. Das Istmoment M_{VM ist} des Verbrennungsmotors 10 ist auf das Basismoment M_{VM Bas} begrenzt und weicht dann temporär vom Solldrehmoment M_{VM} für den Verbrennungsmotor 10 ab. Ein dabei entstehendes Differenzmoment M_{VM} delta wird der Elektromaschine 20 aufgeschaltet und ergibt zusammen mit dem Lade-Sollmoment M_{Lade} ein Sollmoment M_{E} der Elektromaschine 20, wodurch die Drehmomentreserve M_{E res} der Elektromaschine 20 genutzt wird.

Die Elektromaschine 20 setzt ein Sollmoment M_{E} mit hoher Dynamik um, so dass die Drehmomentansteuerung der Elektromaschine 20 im Wesentlichen verzögerungsfrei angenommen wird. Das Ist-Antriebsmoment Mᵢₛₜ des gesamten Antriebs, das sich aus den Istdrehmomenten M_{VM ist} und M_{E ist} von Verbrennungsmotor 10 und Elektromaschine 20 ergibt, folgt somit dem Antriebssollmoment M verzögerungsfrei.

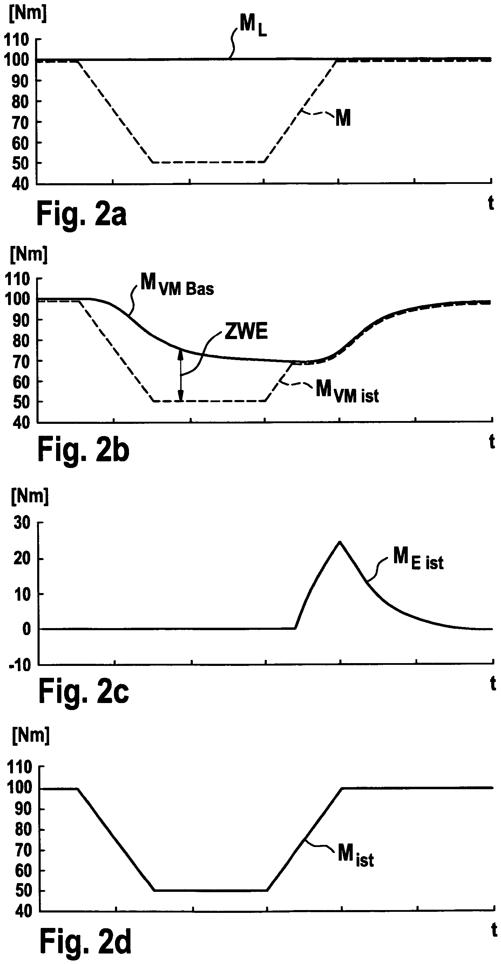

In Fig. 2 a-d sind Zeitverläufe der Drehmomente aus dem Schema der Fig. 1 gezeigt, wobei Fig. 2a den Verlauf eines Vorhalte-Sollmoments M_{L} und eines Sollmoments M für den gesamten Antrieb, Fig. 2b eines Basismoments M_{VM Bas} eines Verbrennungsmotors 10 und eines Istmoments, Fig. 2c eines Istdrehmoments M_{E ist} einer Elektromaschine 20 und Fig. 2d eines Istdrehmoments Mᵢₛₜ des gesamten Antriebs zeigt. Dargestellt ist jeweils ein idealisierter Verlauf einer temporären Zurücknahme des Antriebssollmoments M. wie sie z.B. in Verbindung mit einem Schalten in einen anderen Getriebegang des Fahrzeugs auftreten kann. Das Antriebssollmoment M wird dabei temporär von z.B. 100 Nm auf 50 Nm reduziert, während das Vorhalte-Antriebssollmoment M_{L} konstant bleibt und z.B. 100 Nm beträgt. Die Drehmoment-Werte sind lediglich beispielhaft zu verstehen.

Für eine vereinfachte Darstellung wird der Eingriff über das Lade-Sollmoment M_{Lade} im Folgenden nicht betrachtet; es gilt M_{Lade}=0. Das Maximalmoment M_{E max} der Elektromaschine 20 beträgt z.B. 30 Nm und wird für den betrachteten Zeitabschnitt als konstant angenommen. Damit gilt für die Drehmomentreserve M_{E res} der Elektromaschine 20 M_{E res} =30 Nm.

Mit der Reduktion des Antriebssollmoments M fällt verzögert auch das Basismoment M_{VM Bas} des Verbrennungsmotors 10 ab, wie Fig. 2b zeigt. Der Abfall ist auf das Vorhalte-Antriebssollmoment M_{L}=100 Nm abzüglich der Drehmomentreserve M_{E res} der Elektromaschine 20, mit M_{E res}=30 Nm, begrenzt. Das Basismoment M_{VM Bas} nähert sich während der Reduktion des Antriebssollmomentes M asymptotisch einem Wert von 70 Nm. Wegen M_{Lade}=0 entspricht das Sollmoment M_{VM} für den schnellen Zündwinkelpfad des Verbrennungsmotors 10 dem Antriebssollmoment M. Solange das Antriebssollmoment M unterhalb des Basismomentes M_{VM Bas} liegt, erfolgt ein Zündwinkeleingriff ZWE in der in Fig. 2b angegebenen Stärke, und es gilt M_{VM ist}=M.

Wird das Antriebssollmoment M wieder über 70 Nm gesteigert, wobei der Wert der Differenz aus Vorhalte-Antriebssollmoment M_{L} und Drehmomentreserve M_{E res} der Elektromaschine 20 entspricht, so folgt das Basismoment M_{VM Bas} aufgrund der Maximumauswahl. Die dabei entstehende Verzögerung des Basismomentes M_{VM Bas} führt zu einem verzögerten Aufbau des Istmomentes M_{VM ist} am Verbrennungsmotor 10 gegenüber dem Sollmoment M_{VM} für den Verbrennungsmotor 10, das dem Antriebssollmoment M entspricht. Das Differenzmoment M_{VM} delta wird der Elektromaschine 20 aufgeschaltet. Die Elektromaschine 20 kompensiert somit den verzögerten Drehmomentaufbau am Verbrennungsmotor 10.

Während des Vorgangs entspricht das Ist-Antriebsmoment Mᵢₛₜ des gesamten Antriebs, d.h. das Summendrehmoment von Verbrennungsmotor 10 und Elektromaschine 20, dem Antriebssollmoment M. Die angeforderte Reserve für das gesamte Ist-Antriebsdrehmoment Mᵢₛₜ wird vorgehalten und genutzt, das Basismoment M_{VM Bas} wird reduziert, was eine Zündwinkelspätverstellung minimiert.

## Patentansprüche

1. Verfahren zum Betreiben eines Fahrzeug-Antriebs, mit wenigstens einem Verbrennungsmotor (10) und wenigstens einer mit dem wenigstens einen Verbrennungsmotor (10) mechanisch gekoppelten Elektromaschine (20) sowie mit wenigstens einem mit der wenigstens einen Elektromaschine (20) und dem wenigstens einen Verbrennungsmotor (10) wirkverbundenen Energiespeicher in wenigstens einem elektrischen Bordnetz, wobei der wenigstens eine Verbrennungsmotor (10) und die wenigstens eine Elektromaschine (20) ein angefordertes Antriebssollmoment (M) im Wesentlichen gemeinsam erzeugen, **dadurch gekennzeichnet, dass** eine momentane elektromotorische Drehmomentreserve (M_{E res}) der einen oder mehreren Elektromaschine(n) (20) ermittelt und diese bei einer Vorgabe einer verbrennungsmotorischen Drehmomentreserve für den wenigstens einen oder für die mehreren Verbrennungsmotor(en) (10) so berücksichtigt wird, dass die verbrennungsmotorische Drehmomentreserve minimal wird, wobei die verbrennungsmotorische Drehmomentreserve der Differenz zwischen einem Vorhalte-Sollmoment (M_{VM L}) des Verbrennungsmotors (10) und einem Sollmoment (M_{VM}) des Verbrennungsmotors (10) entspricht, und das Vorhalte-Sollmoment (M_{VM L}) in einigen Betriebszuständen größer gewählt wird als das Sollmoment (M_{VM}).

2. Verfahren nach Anspruch 1, **dadurch gekennzeichnet, dass** die elektromotorische Drehmomentreserve (M_{E res}) anhand von momentanen Betriebszuständen der einen oder der mehreren Elektromaschine(n) (20), des einen oder der mehreren Energiespeicher und des einen oder der mehreren Bordnetze(s) ermittelt wird.

3. Verfahren nach einem der vorhergehenden Ansprüche, **dadurch gekennzeichnet, dass** ein Vorhalte-Antriebssollmoment (M_{L}) und ein Antriebssollmoment (M) für den gesamten Antrieb von einer übergeordneten Steuerungseinrichtung vorgegeben wird.

4. Verfahren nach Anspruch 3, **dadurch gekennzeichnet, dass** die Momentenreserve für das gesamte Antriebsdrehmoment (Mᵢₛₜ) des Antriebs gleich der Differenz zwischen dem Vorhalte-Antriebs-Sollmoment (M_{L}) und dem Antriebssollmoment (M) ist, wobei das Vorhalte-Antriebssollmoment (M_{L}) größer ist als das Antriebssollmoment (M) oder gleich dem Antriebssollmoment (M) ist.

5. Verfahren nach einem der vorhergehenden Ansprüche, **dadurch gekennzeichnet, dass** ein Lade-Sollmoment (M_{Lade}) der einen oder wenigstens einer der Elektromaschine(n) (20) eingestellt wird, das eine Versorgung des oder der Bordnetze(s) und des oder der Energiespeicher sicherstellt.

6. Verfahren nach Anspruch 5, **dadurch gekennzeichnet, dass** bei negativem Lade-Sollmoment (M_{Lade}) die oder wenigstens eine der Elektromaschine(n) (20) generatorisch betrieben wird.

7. Verfahren nach Anspruch 6, **dadurch gekennzeichnet, dass** das Vorhalte-Antriebssollmoment (M_{L}) und das Antriebssollmoment (M) für den gesamten Antrieb erhöht werden, um die Last der Elektromaschine(n) (20) auszugleichen.

8. Verfahren nach einem der Ansprüche 2 bis 7, **dadurch gekennzeichnet, dass** anhand der momentanen Betriebszustände der einen oder der mehreren Elektromaschine(n) (20), des einen oder der mehreren Energiespeicher und des einen oder der mehreren Bordnetze(s) ein momentanes Maximalmoment (M_{E max}) und ein momentanes Minimalmoment (M_{E min}) der einen oder der mehreren Elektromaschine(n) (20) ermittelt werden.

9. Verfahren nach Anspruch 8, **dadurch gekennzeichnet, dass** die elektromotorische Drehmomentreserve (M_{E res}) als Differenz zwischen dem momentanen Maximalmoment (M_{E max}) und dem Lade-Sollmoment (M_{Lade}) gebildet wird.

10. Verfahren nach einem der Ansprüche 5 bis 9, **dadurch gekennzeichnet, dass** ein Vorhalte-Sollmoment (M_{VM L}) für den Verbrennungsmotor (10) aus dem Vorhalte-Antriebssollmoment (M_{L}) für den gesamten Antrieb, korrigiert um das Lade-Sollmoment (M_{Lade}), ermittelt wird, wobei das Vorhalte-Sollmoment (M_{VM L}) durch Luftmassenströmungseinstellung erzeugt wird.

11. Verfahren nach einem der Ansprüche 5 bis 10, **dadurch gekennzeichnet, dass** ein verbrennungsmotorisches Sollmoment (M_{VM}) aus dem um das Lade-Sollmoment (M_{Lade}) korrigierten Antriebssollmoment (M) für den gesamten Antrieb gebildet wird, wobei das verbrennungsmotorisches Sollmoment (M_{VM}) über eine Zündwinkelverstellung eingestellt wird.

12. Verfahren nach einem der vorhergehenden Ansprüche, **dadurch gekennzeichnet, dass** die verbrennungsmotorische Drehmomentreserve erst eingestellt wird, wenn die elektromotorische Drehmomentreserve (M_{E res}) geringer wird als die angeforderte Momentenreserve für das gesamte Antriebsdrehmoment (Mᵢₛₜ).

13. Verfahren nach einem der vorhergehenden Ansprüche, **dadurch gekennzeichnet, dass** ein Differenzmoment (M_{VM} delta) zwischen einem Istmoment (M_{VM ist}) des Verbrennungsmotors (10) und dem Sollmoment (M_{VM}) der oder den Elektromaschine(n) (20) aufgeschaltet wird und aus der Summe des Differenzmoments (M_{VM delta}) und des Lade-Sollmoments (M_{Lade}) ein Sollmoment (M_{E}) der Elektromaschine(n) (20) gebildet wird.

14. Vorrichtung zur Durchführung des Verfahrens zum Betreiben eines Fahrzeug-Antriebs, mit wenigstens einem Verbrennungsmotor (10) und wenigstens einer mit dem wenigstens einen Verbrennungsmotor (10) mechanisch gekoppelten Elektromaschine (20) sowie mit wenigstens einem mit der wenigstens einen Elektromaschine (20) und dem wenigstens einen Verbrennungsmotor (10) wirkverbundenen Energiespeicher in wenigstens einem elektrischen Bordnetz, wobei der wenigstens eine Verbrennungsmotor (10) und die wenigstens eine Elektromaschine (20) ein angefordertes Antriebssollmoment (M) im Wesentlichen gemeinsam erzeugen, und wobei eine übergeordnete Steuerungseinrichtung ausgebildet ist, um ein Vorhalte-Sollmoment (M_{L}) für den gesamten Antrieb und ein Sollmoment (M) für den gesamten Antrieb so vorzugeben, dass eine momentane elektromotorische Drehmomentreserve (M_{E res}) der einen oder mehreren Elektromaschine(n) (20) ermittelbar und diese bei einer Vorgabe einer verbrennungsmotorischen Drehmomentreserve für den wenigstens einen oder für die mehreren Verbrennungsmotor(en) (10) so berücksichtigt ist, dass die verbrennungsmotorische Drehmomentreserve minimal wird und in Summe eine vorgegebene Drehmomentreserve für das Antriebsdrehmoment (Mᵢₛₜ) des gesamten Antriebs vorhanden ist, wobei die verbrennungsmotorische Drehmomentreserve der Differenz zwischen einem Vorhalte-Sollmoment (M_{VM L}) des Verbrennungsmotors (10) und einem Sollmoment (M_{VM}) des Verbrennungsmotors (10) entspricht, und das Vorhalte-Sollmoment (M_{VM L}) in einigen Betriebszuständen von der übergeordneten Steuerungseinrichtung größer als das Sollmoment (M_{VM}) gewählt wird.

## Claims

1. Method for operating a vehicle drive having at least one internal combustion engine (10) and having at least one electric machine (20) which is mechanically coupled to the at least one internal combustion engine (10) and having at least one energy store, which is operatively connected to the at least one electric machine (20) and to the at least one internal combustion engine (10), in at least one on-board electrical system, wherein the at least one internal combustion engine (10) and the at least one electric machine (20) substantially jointly generate a demanded setpoint drive torque (M), **characterized in that** a present electric motor torque reserve (M_{E res}) of the one or more electric machine(s) (20) is determined, and this is taken into consideration in the presetting of an internal combustion engine torque reserve for the at least one or more internal combustion engine(s) (10), such that the internal combustion engine torque reserve is minimal, wherein the internal combustion engine torque reserve corresponds to the difference between a derivative-action setpoint torque (M_{VM L}) of the internal combustion engine (10) and a setpoint torque (M_{VM}) of the internal combustion engine (10), and the derivative-action setpoint torque (M_{VM L}) is selected to be greater than the setpoint torque (M_{VM}) in some operating states.

2. Method according to Claim 1, **characterized in that** the electric motor torque reserve (M_{E res}) is determined on the basis of present operating states of the one or more electric machine(s) (20), of the one or more energy store(s) and of the one or more on-board electrical system (s) .

3. Method according to one of the preceding claims, **characterized in that** a derivative-action setpoint drive torque (M_{L}) and a setpoint drive torque (M) for the overall drive is predefined by a superordinate control device.

4. Method according to Claim 3, **characterized in that** the torque reserve for the overall drive torque (Mist) of the drive is equal to the difference between the derivative-action setpoint drive torque (M_{L}) and the setpoint drive torque (M), wherein the derivative-action setpoint drive torque (M_{L}) is greater than the setpoint drive torque (M) or equal to the setpoint drive torque (M).

5. Method according to one of the preceding claims, **characterized in that** a setpoint charging torque (M_{Lade}) of the one or at least one electric machine(s) (20) is set which ensures a supply to the one or more on-board electrical system(s) and to the one or more energy store(s).

6. Method according to Claim 5, **characterized in that**, in the case of a negative setpoint charging torque (M_{Lade}), the one or at least one electric machine(s) (20) is operated as a generator.

7. Method according to Claim 6, **characterized in that** the derivative-action setpoint drive torque (M_{L}) and the setpoint drive torque (M) for the overall drive are increased in order to compensate the load of the electric machine(s) (20).

8. Method according to one of Claims 2 to 7, **characterized in that** a present maximum torque (M_{E max}) and a present minimum torque (M_{E min}) of the one or more electric machine(s) (20) are determined on the basis of the present operating states of the one or more electric machine(s) (20), of the one or more energy store(s) and of the one or more on-board electrical system(s).

9. Method according to Claim 8, **characterized in that** the electric motor torque reserve (M_{E res}) is formed as a difference between the present maximum torque (M_{E max}) and the setpoint charging torque (M_{Lade}).

10. Method according to one of Claims 5 to 9, **characterized in that** a derivative-action setpoint torque (M_{VM L}) for the internal combustion engine (10) is determined from the derivative-action setpoint drive torque (M_{L}) for the overall drive, corrected by the setpoint charging torque (M_{Lade}), wherein the derivative-action setpoint torque (M_{VM L}) is generated by air mass flow adjustment.

11. Method according to one of Claims 5 to 10, **characterized in that** an internal combustion engine setpoint torque (M_{VM}) is formed from the setpoint drive torque (M), corrected by the setpoint charging torque (M_{Lade}), for the overall drive, wherein the internal combustion engine setpoint torque (M_{VM}) is set by means of an ignition angle adjustment.

12. Method according to one of the preceding claims, **characterized in that** the internal combustion engine torque reserve is set for the first time when the electric motor torque reserve (M_{E res}) falls below the demanded torque reserve for the overall drive torque (Mᵢₛₜ).

13. Method according to one of the preceding claims, **characterized in that** a torque difference (M_{VM delta}) between an actual torque (M_{VM ist}) of the internal combustion engine (10) and the setpoint torque (M_{VM}) is applied to the one or more electric machine(s) (20), and a setpoint torque (M_{E}) of the electric machine(s) (20) is formed from the sum of the torque difference (M_{VM delta}) and the setpoint charging torque (M_{Lade}).

14. Device for carrying out the method for operating a vehicle drive having at least one internal combustion engine (10) and having at least one electric machine (20) which is mechanically coupled to the at least one internal combustion engine (10) and having at least one energy store, which is operatively connected to the at least one electric machine (20) and to the at least one internal combustion engine (10), in at least one on-board electrical system, wherein the at least one internal combustion engine (10) and the at least one electric machine (20) substantially jointly generate a demanded setpoint drive torque (M), and wherein a superordinate control device is formed so as to predefine a derivative-action setpoint torque (M_{L}) for the overall drive and a setpoint torque (M) for the overall drive in such a way that a present electric motor torque reserve (M_{E res}) of the one or more electric machine(s) (20) can be determined, and this is taken into consideration in the presetting of an internal combustion engine torque reserve for the at least one or more internal combustion engine(s) (10), such that the internal combustion engine torque reserve is minimal and, in total, a predefined torque reserve for the drive torque (Mist) of the overall drive is provided, wherein the internal combustion engine torque reserve corresponds to the difference between a derivative-action setpoint torque (M_{VM L}) of the internal combustion engine (10) and a setpoint torque (M_{VM}) of the internal combustion engine (10), and the derivative-action setpoint torque (M_{VM L}) is selected by the superordinate control device to be greater than the setpoint torque (M_{VM}) in some operating states.

## Revendications

1. Procédé pour faire fonctionner un entraînement de véhicule, avec au moins un moteur à combustion interne (10) et au moins un moteur électrique (20) couplé de façon mécanique à l'au moins un moteur à combustion interne (10) ainsi qu'avec au moins un accumulateur d'énergie placé dans au moins un réseau de bord électrique et relié activement à l'au moins un moteur électrique (20) et à l'au moins un moteur à combustion interne (10), l'au moins un moteur à combustion interne (10) et l'au moins un moteur électrique (20) produisant pour l'essentiel ensemble un couple théorique d'entraînement (M) demandé, **caractérisé en ce qu'**une réserve de couple de rotation (M_{E res}) momentanée du moteur électrique provenant du ou des moteurs électriques (20) est calculée et que celle-ci est prise en compte en cas d'indication d'une réserve de couple de rotation provenant du moteur à combustion, pour le ou les moteurs à combustion interne (10) de telle sorte que la réserve de couple de rotation provenant du moteur à combustion est minimale, la réserve de couple de rotation provenant du moteur à combustion correspondant à la différence entre un couple théorique prescrit (M_{VM L}) du moteur à combustion interne (10) et un couple théorique (M_{VM}) du moteur à combustion interne (10) et le couple théorique prescrit (M_{VM L}) étant choisi, dans quelques états de fonctionnement, de façon à être supérieur au couple théorique (M_{VM}).

2. Procédé selon la revendication 1, **caractérisé en ce que** la réserve de couple de rotation (M_{E res}) provenant du moteur électrique est calculée à partir d'états de fonctionnement momentanés du ou des moteurs électriques (20), du ou des accumulateurs d'énergie et du ou des réseaux de bord.

3. Procédé selon l'une quelconque des revendications précédentes, **caractérisé en ce qu'**un couple théorique prescrit d'entraînement (M_{L}) et un couple théorique d'entraînement (M) est prédéfini pour l'ensemble de l'entraînement d'un dispositif de commande supérieur.

4. Procédé selon la revendication 3, **caractérisé en ce que** la réserve de couple pour l'ensemble du couple de rotation d'entraînement (Mᵢₛₜ) de l'entraînement est égale à la différence entre le couple théorique prescrit d'entraînement (M_{L}) et le couple théorique d'entraînement (M), le couple théorique prescrit d'entraînement (M_{L}) étant supérieur au couple théorique d'entraînement (M) ou égal au couple théorique d'entraînement (M).

5. Procédé selon l'une quelconque des revendications précédentes, **caractérisé en ce qu'**un couple théorique de charge (M_{Lade}) du ou des moteurs électriques (20) est réglé de façon à garantir une alimentation du ou des réseaux de bord et du ou des accumulateurs d'énergie.

6. Procédé selon la revendication 5, **caractérisé en ce qu'**en présence d'un couple théorique de charge (M_{Lade}) négatif, le ou les moteurs électriques (20) sont entraînés à la façon d'une génératrice.

7. Procédé selon la revendication 6, **caractérisé en ce que** le couple théorique prescrit d'entraînement (M_{L}) et le couple théorique d'entraînement (M) sont augmentés pour l'ensemble de l'entraînement pour compenser la charge des moteurs électriques (20).

8. Procédé selon l'une quelconque des revendications 2 à 7, **caractérisé en ce qu'**on calcule un couple maximal (M_{E max}) momentané et un couple minimal (M_{E min}) momentané du ou des moteurs électriques (20) à l'aide des états de fonctionnement momentanés du ou des moteurs électriques (20), du ou des accumulateurs d'énergie et du ou des réseaux de bord.

9. Procédé selon la revendication 8, **caractérisé en ce que** la réserve de couple de rotation (M_{E res}) provenant du moteur électrique prend la forme d'une différence entre le couple maximal momentané (M_{E max}) et le couple théorique de charge (M_{Lade}).

10. Procédé selon l'une quelconque des revendications 5 à 9, **caractérisé en ce qu'**un couple théorique prescrit (M_{VM L}) du moteur à combustion interne (10) est calculé à partir du couple théorique prescrit d'entraînement (M_{L}) de l'ensemble de l'entraînement, puis corrigé du couple théorique de charge (M_{Lade}), le couple théorique prescrit (M_{VM L}) étant produit par réglage du débit massique d'air.

11. Procédé selon l'une quelconque des revendications 5 à 10, **caractérisé en ce qu'**un couple théorique (M_{VM}) provenant du moteur à combustion est formé à partir du couple théorique d'entraînement (M) corrigé du couple théorique de charge (M_{Lade}) pour l'ensemble de l'entraînement en entrée, le couple théorique (M_{VM}) provenant du moteur à combustion étant réglé par le biais d'un réglage de l'angle d'allumage.

12. Procédé selon l'une quelconque des revendications précédentes, **caractérisé en ce que** la réserve de couple de rotation provenant du moteur à combustion n'est réglée que lorsque la réserve de couple de rotation (M_{E res}) provenant du moteur électrique est inférieure à la réserve de couple demandée pour l'ensemble du couple de rotation d'entraînement (Mᵢₛₜ) .

13. Procédé selon l'une quelconque des revendications précédentes, **caractérisé en ce qu'**un couple différentiel (M_{VM delta}) est commuté entre un couple réel (M_{VM ist}) du moteur à combustion interne (10) et le couple théorique (M_{VM}) du ou des moteurs électriques (20) et qu'un couple théorique (M_{E}) des moteurs électriques (20) est constitué à partir de la somme du couple différentiel (M_{VM delta}) et du couple théorique de charge (M_{Lade}) .

14. Dispositif de mise en oeuvre du procédé pour faire fonctionner un entraînement de véhicule, avec au moins un moteur à combustion interne (10) et au moins un moteur électrique (20) couplé de façon mécanique à l'au moins un moteur à combustion interne (10) ainsi qu'avec au moins un accumulateur d'énergie placé dans au moins un réseau de bord électrique et relié activement à l'au moins un moteur électrique (20) et à l'au moins un moteur à combustion interne (10), l'au moins un moteur à combustion interne (10) et l'au moins un moteur électrique (20) produisant pour l'essentiel ensemble un couple théorique d'entraînement (M) demandé, un dispositif de commande supérieur étant réalisé pour prédéfinir un couple théorique prescrit (M_{L}) pour l'ensemble de l'entraînement et un couple théorique (M) pour l'ensemble de l'entraînement, une réserve de couple de rotation (M_{E res}) momentanée du moteur électrique provenant du ou des moteurs électriques (20) étant calculée et celle-ci étant prise en compte en cas d'indication d'une réserve de couple de rotation provenant du moteur à combustion, pour le ou les moteurs à combustion interne (10), de telle sorte que la réserve de couple de rotation provenant du moteur à combustion est minimale, et qu'au total, on obtient une réserve de couple de rotation prédéfinie pour le couple de rotation d'entraînement (Mᵢₛₜ) de l'ensemble de l'entraînement, la réserve de couple de rotation provenant du moteur à combustion correspondant à la différence entre un couple théorique prescrit (M_{VM L}) du moteur à combustion interne (10) et un couple théorique (M_{VM}) du moteur à combustion interne (10) et le couple théorique prescrit (M_{VM L}) étant choisi, dans quelques états de fonctionnement du dispositif de commande supérieur, de façon à être supérieur au couple théorique (M_{VM}).
